(19) Europäisches Patentamt / European Patent Office / Office européen des brevets

(11) **EP 1 842 293 B1**

(12) **FASCICULE DE BREVET EUROPEEN**

(45) Date de publication et mention
de la délivrance du brevet:
**07.05.2008 Bulletin 2008/19**

(51) Int Cl.:
***H04B 1/69*** (2006.01)

(21) Numéro de dépôt: **06709426.8**

(22) Date de dépôt: **23.01.2006**

(86) Numéro de dépôt international:
**PCT/FR2006/050041**

(87) Numéro de publication internationale:
**WO 2006/079737 (03.08.2006 Gazette 2006/31)**

(54) **RECEPTEUR UWB ET PROCEDE ET SYSTEME DE TRANSMISSION DE DONNEES**

UWB-EMPFÄNGER UND DATENÜBERTRAGUNGSVERFAHREN UND -SYSTEM

UWB RECEIVER AND DATA TRANSMISSION METHOD AND SYSTEM

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **28.01.2005 FR 0500886**

(43) Date de publication de la demande:
**10.10.2007 Bulletin 2007/41**

(73) Titulaire: **Groupe Des Ecoles Des
Telecommunications (GET)
Institut National Des Telecommunications (INT)
91011 Evry Cédex (FR)**

(72) Inventeur: **NI, Yang
F-91120 Palaiseau (FR)**

(74) Mandataire: **Tanty, François
Nony & Associés
3, rue de Penthièvre
75008 Paris (FR)**

(56) Documents cités:
**US-A1- 2003 198 308**

• **HONGLEI ZHANG ET AL: "Generalized
transmitted-reference UWB systems" 16
novembre 2003 (2003-11-16), 2003 IEEE
CONFERENCE ON ULTRA WIDEBAND SYSTEMS
AND TECHNOLOGIES, NOV. 16-19, 2003,
PISCATAWAY, NJ, USA,IEEE, PAGE(S) 147-151 ,
XP010683746 ISBN: 0-7803-8187-4 cité dans la
demande Section 1**
• **ROMME J ET AL: "Transmit reference impulse
radio systems using weighted correlation"
INTERNATIONAL WORKSHOP ON ULTRA
WIDEBAND SYSTEMS, 2004. JOINT WITH
CONFERENCE ON ULTRAWIDEBAND SYSTEMS
AND TECHNOLOGIES. JOINT UWBST &
IWUWBS. 2004 KYOTO, JAPAN MAY 18-21, 2004,
PISCATAWAY, NJ, USA,IEEE, 18 mai 2004
(2004-05-18), pages 141-145, XP010716236 ISBN:
0-7803-8373-7**

**Description**

La présente invention concerne un récepteur ultra large bande (UWB) ainsi qu'un procédé et un système de transmission de données mettant en oeuvre un tel récepteur.

Codage et détection sont les deux éléments clé de tous les systèmes de communication par voie radiofréquence.

Dans un système à bande étroite, le codage de l'information se fait par une modulation sur une porteuse de forme sinusoïdale à haute fréquence, ce qui facilite le rayonnement et la propagation dans l'espace libre.

La modulation restant très lente par rapport à la fréquence de la porteuse, le signal modulé garde sa forme d'onde sensiblement sinusoïdale.

Les multiples chemins de propagation possibles entre l'émission et la réception font que le signal reçu résulte d'une superposition d'échos d'amplitude et de déphasage variables. Mais la nature sinusoïdale de la forme d'onde du signal émis fait que cette superposition reste sensiblement sinusoïdale.

Dans ce contexte, la détection du signal à la réception peut se faire avec une corrélation par rapport à un signal de référence qui peut être généré localement au sein du récepteur, car la forme d'onde de ce signal de référence est connue, étant sinusoïdale.

Dans un système de communication ultra large bande, la communication peut avoir une vitesse comparable à celle de la fréquence de la porteuse utilisée ou une porteuse impulsionnelle non sinusoïdale peut être utilisée. Dans les deux cas, la forme d'onde du signal modulé perd l'allure sinusoïdale.

L'utilisation d'impulsions de très courte durée comme porteuse permet non seulement une grande vitesse de transmission mais aussi une réalisation électronique potentiellement plus simple, parce que les traitements des signaux dans un tel système reposent essentiellement sur des manipulations temporelles des signaux qui sont aisément intégrables dans un circuit VLSI de manière monolithique.

Malgré ces avantages, les systèmes ultra large bande posent des difficultés de mise au point, car la faible durée d'impulsion du signal demande une rapidité extrême à sa génération et une précision temporelle très fine à sa détection.

Les méthodes à détection d'énergie ne sont pas satisfaisantes, un détecteur d'énergie ne pouvant distinguer le signal utile et le bruit et présentant une sensibilité relativement faible.

Le brevet US 6 763 057 décrit un système de transmission de données ultra large bande nécessitant de connaître la forme d'onde du signal reçu et de générer un signal de référence. Ce système est donc relativement complexe.

Par ailleurs, il a été proposé dans le passé dans les publications Multiuser Interference and Inter-Frame Interference in UWB Transmitted Reference Systems, 2004, Joint UWBST & IWUWBST, 2004, International Workshop on 18-21 May 2004, pp 96-100 et Generalized Transmitted Reference UWB Systems, Ultrawidebard Systems and Technologies, 2003 IEEE Conference on 16-19 Nov. 2003, pp 147-151, d'émettre des doublets d'impulsions ultra large bande, ces impulsions étant corrélées et séparées d'un retard connu avec précision.

Quand les impulsions de ce doublet arrivent au récepteur, ces impulsions ont subi les mêmes déformations en forme d'onde et restent corrélées.

La réception comporte une ligne à retard pour créer une copie retardée du signal reçu, le retard introduit par cette ligne à retard étant le même que celui séparant les impulsions du doublet. Un corrélateur reçoit ces deux signaux et génère un signal détecté.

Ce procédé supprime la difficulté de la génération du signal de référence, mais la réalisation de la ligne à retard est complexe. En outre, le retard n'est pas aisément programmable et la ligne à retard présente une longueur qui la rend pratiquement impossible à intégrer dans un circuit miniature.

La présente invention vise à proposer un récepteur ultra large bande performant tout en étant de construction simple.

L'invention a ainsi pour objet, selon l'un de ses aspects, un récepteur de signal ultra large bande, comportant :

- au moins un premier ensemble de cellules d'échantillonnage pour échantillonner la forme d'onde d'un signal reçu,
- au moins un deuxième ensemble de cellules d'échantillonnage pour échantillonner la forme d'onde du signal reçu, avec un retard prédéfini $\delta$,
- au moins un corrélateur pour délivrer un signal détecté dépendant de la corrélation entre les formes d'onde ainsi échantillonnées.

Un tel récepteur permet de s'affranchir de la génération de la forme d'onde du signal reçu, sous réserve que celui-ci comporte au moins deux impulsions corrélées entre elles et décalées de la durée $\delta$.

Le terme « corrélateur » doit être compris avec un sens large et couvre de manière générale tous les dispositifs capables de délivrer un signal dont la valeur dépend de la ressemblance entre au moins deux formes d'onde.

Le retard $\delta$ peut être choisi par exemple en fonction du trajet de propagation, de telle manière à ce que les deux impulsions, à la réception, ne se superposent pas d'une manière qui pourrait gêner leur réception.

Le retard $\delta$ est par exemple compris entre 10 nS et 50 nS.

Dans un exemple de mise en oeuvre de l'invention, l'acquisition du signal par les premier et deuxième ensembles de cellules d'échantillonnage est commandée par deux chaînes d'éléments à retard distinctes, respectivement associées auxdits ensembles de cellules.

La présence de chaînes d'éléments à retard distinctes permet de commander l'acquisition du signal par le deuxième ensemble de cellules d'échantillonnage de manière simple et précise, par exemple au moyen d'un dispositif à quartz.

Dans un autre exemple de mise en oeuvre de l'invention, l'acquisition du signal par les premier et deuxième ensembles de cellules d'échantillonnage est commandée par une seule chaîne d'éléments à retard.

Le retard est par exemple constant au cours d'une session de communication.

Le retard peut encore, dans un autre exemple de mise en oeuvre de l'invention, être programmable et par exemple être constant ou varier au cours d'une session de communication selon une loi prédéfinie.

Plusieurs transmissions simultanées sont possibles dans le cas où à chaque système de transmission est attribué un retard δ propre, de manière similaire à la division par fréquences dans les transmissions classiques à bande étroite.

Le retard δ peut être programmable selon une même loi connue pour un récepteur et l'émetteur associé.

Un avantage de l'invention est la facilité de la synchronisation entre l'émetteur et le récepteur puisqu'il suffit que les impulsions se trouvent dans la fenêtre temporelle d'échantillonnage pour que la synchronisation soit établie.

Cette fenêtre d'échantillonnage a de préférence une durée de quelques dizaines de nanosecondes tandis que la durée des impulsions est de l'ordre par exemple de quelques centaines de picosecondes. Un tel ordre de grandeur facilite considérablement la réalisation et contribue efficacement à une réduction de la complexité et de la consommation électrique.

Un récepteur selon l'invention peut être dépourvu, dans des exemples de réalisation, d'amplificateur d'antenne, ce qui facilite encore la réalisation et diminue la consommation électrique.

L'invention a encore pour objet, selon un autre de ses aspects, un procédé de transmission de données, comportant :

- la réception d'un signal ultra large bande comportant au moins deux impulsions corrélées entre elles et portant une information utile, les deux impulsions étant décalées temporellement d'un retard δ,
- un premier échantillonnage de la forme d'onde du signal reçu,
- un deuxième échantillonnage de la forme d'onde du signal reçu avec un retard δ,
- la délivrance d'un signal détecté dépendant de la corrélation des formes d'onde des deux signaux ainsi échantillonnés.

La vitesse d'échantillonnage est de préférence supérieure ou égale à deux fois la fréquence maximale contenue dans les impulsions du signal reçu. La fréquence d'échantillonnage est par exemple supérieure à 10 Ghz, par exemple de l'ordre de 20 Ghz.

Lorsque le signal émis comporte des doublets d'impulsions, l'information est par exemple émise selon un codage en tout ou rien ($O_nO_{ff}K_{ey}$) ou selon un codage différentiel. Le récepteur comporte des moyens de décodage correspondants.

Dans une variante de mise en oeuvre de l'invention, les impulsions émises au sein d'un doublet peuvent encore se trouver en opposition de phase ou en phase selon l'état binaire à transmettre, ce qui complique l'électronique de l'émetteur mais permet de gagner en rapport signal sur bruit.

Chaque ensemble de cellules d'échantillonnage comporte par exemple entre 100 et 300 cellules d'échantillonnage.

Les premier et deuxième ensembles de cellules d'échantillonnage et le corrélateur sont avantageusement construits sous la forme d'un circuit intégré monolithique, notamment en technologie CMOS.

L'invention a encore pour objet, selon un autre de ses aspects, un système de transmission de données comportant :

- au moins un récepteur ultra large bande tel que défini plus haut,
- au moins un émetteur agencé pour émettre des multiplets d'au moins deux impulsions corrélées entre elles, notamment des doublets d'impulsions corrélées entre elles, les deux impulsions étant décalées d'un retard prédéfini.

L'invention pourra être mieux comprise à la lecture de la description détaillée qui va suivre, d'exemples de mise en oeuvre non limitatifs de celle-ci, et à l'examen du dessin annexé, sur lequel :

- la figure 1 représente de manière schématique un système de transmission de données réalisé conformément à un exemple de mise en oeuvre de l'invention,
- la figure 2 représente de manière schématique un doublet d'impulsions,
- la figure 3 représente de manière schématique un signal pouvant servir à générer le doublet d'impulsions,
- la figure 4 représente de manière schématique et partielle un détail de réalisation d'un récepteur conforme à l'invention,
- la figure 5 représente de manière schématique un ensemble de cellules d'échantillonnage,
- la figure 6 représente un exemple de signal reçu,
- la figure 7 représente un exemple de signal échantillonné,
- la figure 8 représente de manière schématique une structure de corrélateur cellulaire parallèle,
- la figure 9 représente la juxtaposition des formes d'onde enregistrées dans les deux ensembles de cellules d'échantillonnage, et

- la figure 10 représente une variante d'agencement des cellules d'échantillonnage.

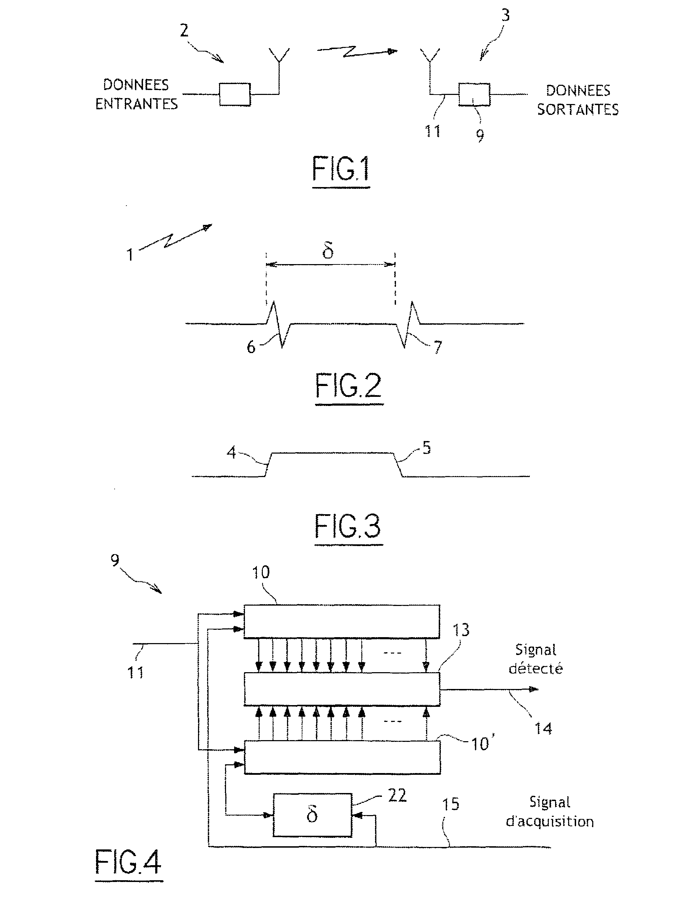

Le système 1 de transmission de données ultra large bande représenté à la figure 1 comporte un émetteur 2 et un récepteur 3 agencé pour recevoir les signaux provenant de l'émetteur 2.

Conformément à un aspect de l'invention, l'émetteur 2 émet des multiplets d'impulsions comportant chacun au moins deux impulsions, en l'espèce des doublets d'impulsions tel que celui représenté à la figure 1, deux impulsions 6 et 7 au sein du doublet étant séparées d'un retard δ connu avec précision.

Dans l'exemple illustré, les deux impulsions 6 et 7 sont en opposition de phase, ayant par exemple été générées sur les fronts respectivement montant 4 et descendant 5 d'un signal binaire tel que celui représenté à la figure 3.

Les impulsions peuvent être générées par exemple au moyen d'un montage à diode à récupération rapide SRD.

Les antennes de l'émetteur et du récepteur sont par exemple des antennes à large bande, directionnelles ou non, par exemple du type bicône, discône, ou à onde progressive.

On pourra se référer utilement à l'ouvrage UWB, Theory and Applications, Editors Ian Oppermann, Matti Hämäläinen, Jari Linatti, JOHN WILEY AND SONS, LTD 2004 ISBN 0-470-86917-8.

L'information émise par l'émetteur peut être codée de diverses manières, par exemple selon un codage en tout ou rien ou selon un codage différentiel.

Le récepteur 3 comporte un circuit récepteur 9 qui est représenté de manière plus détaillée à la figure 4.

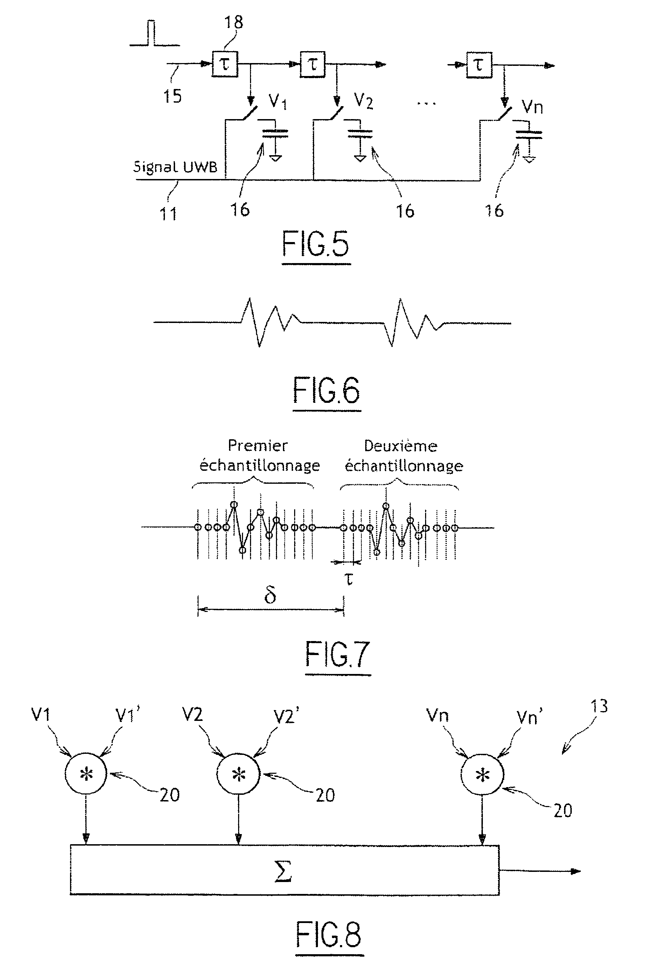

Ce circuit récepteur 9 comporte un premier ensemble 10 de cellules d'échantillonnage 16 agencées comme illustré à la figure 5 et un deuxième ensemble 10' de cellules d'échantillonnage 16, par exemple d'agencement identique au premier, recevant en parallèle le signal 11 provenant de l'antenne.

Le circuit récepteur 9 comporte en outre un corrélateur cellulaire parallèle 13 délivrant un signal détecté 14 dépendant de la corrélation entre les formes d'ondes échantillonnées par les premier et deuxième ensembles de cellules d'échantillonnage, comme cela sera précisé plus loin.

Un échantillonneur capable d'échantillonner une forme d'onde rapide est décrit dans la publication *Gigahertz Waveform Sampling and Digitization Circuit Design and Implementation*.

L'échantillonnage s'effectue sur la base d'un signal d'acquisition 15, ce signal 15 étant retardé de la durée δ par un élément à retard 22 avant d'atteindre le deuxième ensemble 10'.

Le signal d'acquisition 15 est par exemple généré par un dispositif à quartz et chaque cycle d'échantillonnage peut avoir lieu après que le corrélateur 13 ait délivré une information liée à l'éventuelle corrélation des formes d'onde échantillonnées.

L'élément à retard 22 est par exemple programmable, ce qui peut permettre de créer des canaux de communication.

Lors d'une session de communication, le retard δ peut être constant, ou variable si le retard δ varie du côté de l'émetteur selon une loi prédéfinie, connue du récepteur.

Les cellules d'échantillonnage 16 sont commandées dans chaque ensemble 10 ou 10', dans l'exemple de la figure 4, par une chaîne d'éléments à retard 18, introduisant des retards σ consécutifs, de telle sorte que le signal d'acquisition 15, injecté dans cette chaîne d'éléments à retard 18, se propage et déclenche successivement l'échantillonnage par les cellules 16.

Chaque ensemble 10 et 10' permet ainsi d'enregistrer des tensions $V_1$, $V_2$, ..., $V_n$ et $V'_1$, $V'_2$, ..., $V'_n$ correspondant à la forme d'onde du signal échantillonné pendant la durée de la propagation du signal d'acquisition dans la chaîne d'éléments à retard 18.

On a représenté à la figure 6 un exemple de signal reçu, après émission du doublet de la figure 2.

On a illustré sur cette figure la déformation du signal qui accompagne sa propagation.

On a représenté à la figure 7 les signaux échantillonnés dans les premier et deuxième ensembles 10 et 10' de cellules d'échantillonnage.

Le corrélateur 13 est par exemple un corrélateur parallèle cellulaire, représenté schématiquement à la figure 8, comportant une pluralité de cellules 20 qui peuvent effectuer le produit des tensions $V_1*V'_1$, $V_2*V'_2$, ..., $V_n* V'_n$ et calculer la somme de ces produits.

Le produit des tensions est par exemple effectué au moyen de cellules de Gilbert.

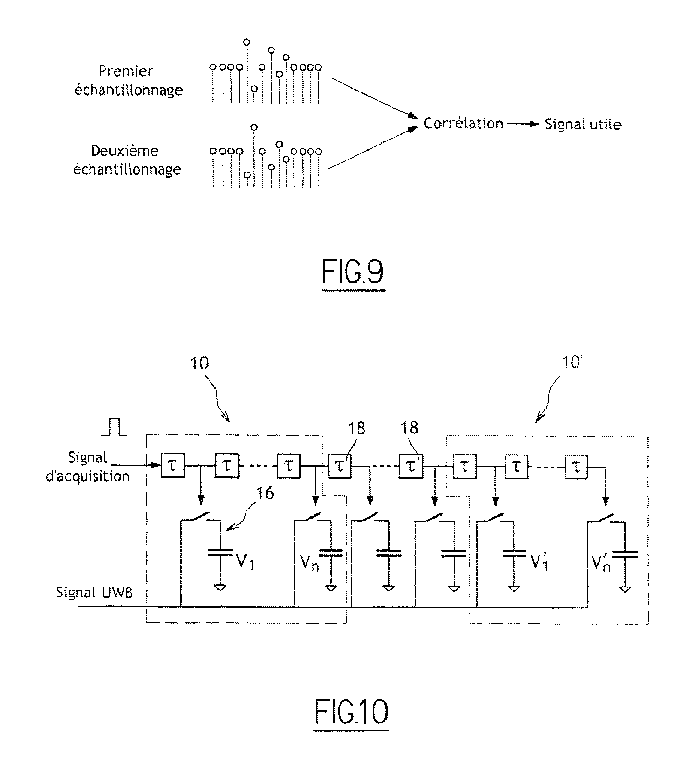

On a représenté à la figure 9 de manière juxtaposée les deux formes d'ondes échantillonnées dans les premier et deuxième ensembles de cellules d'échantillonnage. Le signal détecté 14 dépend de leur ressemblance.

Bien entendu, l'invention n'est pas limitée aux exemples de réalisation qui viennent d'être décrits.

Par exemple, les ensembles 10 et 10' de cellules d'échantillonnage 16 peuvent être commandés par une même chaîne d'éléments à retard, comme illustré à la figure 10.

Un certain nombre d'éléments à retard 18 entre les premier et deuxième ensembles 10 et 10' permet de générer le retard δ et de commander l'échantillonnage par le deuxième ensemble 10' avec ce retard δ.

Un système de transmission de données selon l'invention peut trouver de nombreuses applications, par exemple pour transmettre des données numériques sur de faibles distances, par exemple en remplacement de la technologie Bluetooth®, pour faire communiquer des capteurs en réseau, ou pour équiper des téléphones ou autres appareils portables.

Le récepteur peut comporter, le cas échéant, trois ensembles de cellules d'échantillonnage ou plus, lorsque le signal reçu comporte des triplets ou autres multiplets d'impulsions.

Le traitement des tensions correspondant aux formes d'ondes échantillonnées dans le corrélateur peut s'effectuer autrement qu'avec des cellules de Gilbert, par exemple en évaluant les grandeurs .

$$\sum_i \left| V_i - V_i^{'} \right|^2 \quad \text{ou} \quad \sum_i \left| V_i - V_i^{'} \right|$$

Le cas échéant, les cellules d'échantillonnage peuvent être des cellules plus complexes capables par exemple de mémoriser l'information sous une forme numérique plutôt qu'analogique.

La liaison entre le récepteur et l'émetteur peut être filaire.

Dans toute la description, y compris les revendications, l'expression « comportant un » doit être comprise comme étant synonyme de « comportant au moins un », sauf si le contraire est spécifié.

## Revendications

**1.** Récepteur (3) de signal ultra large bande (Signal UWB) comportant:

- au moins un premier ensemble de cellules d'échantillonnage (10) pour échantillonner la forme d'onde d'un signal reçu,
- au moins un deuxième ensemble de cellules d'échantillonnage (10') pour échantillonner la forme d'onde du signal reçu, avec un retard prédéfini δ,
- au moins un corrélateur (13) pour délivrer un signal détecté (14) dépendant de la corrélation entre les formes d'onde ainsi échantillonnées.

**2.** Récepteur selon la revendication 1, dans lequel l'acquisition du signal par les premier et deuxième ensembles de cellules d'échantillonnage est commandée par deux chaînes d'éléments à retard (18) distinctes, respectivement associées auxdits ensembles de cellules.

**3.** Récepteur selon la revendication 1, dans lequel l'acquisition du signal par les cellules des premier et deuxièmes ensembles de cellules d'échantillonnage est commandée par une seule chaîne d'éléments à retard (18).

**4.** Récepteur selon l'une quelconque des revendications 1 à 3, le retard δ étant programmable.

**5.** Récepteur selon la revendication 4, dans lequel le retard δ est constant au cours d'une session de communication.

**6.** Récepteur selon la revendication 4, dans lequel le retard δ varie au cours d'une session de communication selon une loi prédéfinie.

**7.** Récepteur selon la revendication 1, dans lequel le corrélateur (13) est un corrélateur parallèle cellulaire.

**8.** Récepteur selon la revendication 1, dans lequel les premier et deuxième ensembles de cellules d'échantillonnage (16) et le corrélateur (13) sont construits sous la forme d'un circuit intégré monolithique.

**9.** Récepteur selon l'une quelconque des revendications précédentes, étant dépourvu d'amplificateur d'antenne.

**10.** Procédé de transmission de données, comportant :

- la réception d'un signal ultra large bande (signal UWB) comportant au moins deux impulsions (6,7) corrélées entre elles et portant une information utile, les deux impulsions étant décalées temporellement d'un retard δ,
- un premier échantillonnage du signal reçu,
- un deuxième échantillonnage du signal reçu avec le retard δ,
- la délivrance d'un signal détecté (14) dépendant de la corrélation des deux signaux échantillonnés.

**11.** Procédé selon la revendication 10, le signal détecté (17) émis comportant des doublets d'impulsions.

**12.** Procédé selon la revendication 10 ou 11, l'information étant émise selon un codage en tout ou rien.

**13.** Procédé selon la revendication 10 ou 11, l'information étant émise selon un codage différentiel.

**14.** Procédé selon la revendication 10 ou 11, les impulsions (6,7) d'au moins un doublet émis étant en opposition de phase.

**15.** Système (1) de transmission de données, comportant :

- au moins un récepteur ultra large bande (3) tel que défini dans l'une quelconque des revendications 1 à 9,
- au moins un émetteur (12) agencé pour émettre des multiplets d'au moins deux impulsions corrélées entre elles et décalées d'un retard prédéfini δ.

## Claims

**1.** An ultra-wideband signal (UWB Signal) receiver (3) comprising:

· at least a first set of sampling cells (10) for sampling the waveform of a received signal;
· at least a second set of sampling cells (10') for sampling the waveform of the received signal, with a predefined delay δ; and
· at least one correlator (13) for delivering a detected signal (14) depending on the correlation between the waveforms thus sampled.

2. A receiver according to claim 1, in which signal acquisition by the first and second sets of sampling cells is controlled by two distinct chains of delay elements (18), respectively associated with said sets of cells.

3. A receiver according to claim 1, in which signal acquisition by the cells of the first and second sets of sampling cells is controlled by a single chain of delay elements (18).

4. A receiver according to any one of claims 1 to 3, in which the delay δ is programmable.

5. A receiver according to claim 4, in which the delay δ is constant during a communications session.

6. A receiver according to claim 4, in which the delay δ varies during a communications session in application of a predefined relationship.

7. A receiver according to claim 1, in which the correlator (13) is a parallel cell correlator.

8. A receiver according to claim 1, in which the first and second sets of sampling cells (16) and the correlator (13) are constructed in the form of a monolithic integrated circuit.

9. A receiver according to any preceding claim, having no antenna amplifier.

10. A data transmission method comprising:

receiving an ultra-wideband signal (UWB Signal) comprising at least two mutually correlated impulses (6, 7) carrying useful information, the two impulses being offset in time by a delay δ;
· first sampling of the received signal;
· second sampling of the received signal with the delay δ; and
· delivering a detected signal (14) that depends on the correlation between the two sampled signals.

11. A method according to claim 10, in which the transmitted ultra-wideband signal comprises impulse doublets.

12. A method according to claim 10 or claim 11, in which the information is transmitted using on/off encoding.

13. A method according to claim 10 or claim 11, in which the information is transmitted using differential encoding.

14. A method according to claim 10 or claim 11, in which the impulses (6, 7) of at least one transmitted doublet are in phase opposition.

15. A data transmission system (1) comprising:

at least one ultra-wideband receiver (3) as defined in any one of claims 1 to 9; and
· at least one transmitter (12) arranged to transmit multiplets of at least two mutually correlated impulses that are offset by a predefined delay δ.

**Patentansprüche**

1. Ultrabreitband-Signalempfänger (UWB) (3), umfassend:

- mindestens eine erste Gruppe von Samplingzellen (10) zum Sampeln der Wellenform eines empfangenen Signals,
- mindestens eine zweite Gruppe von Samplingzellen (10') zum Sampeln der Wellenform eines mit einer vorgegebenen Verzögerung δ empfangenen Signals,
- mindestens einen Korrelator (13) zur Ausgabe eines erfassten Signals (14), das sich aus der Korrelation zwischen den so gesampelten Wellenformen ergibt.

2. Empfänger nach Anspruch 1, bei dem die Erfassung des Signals durch die erste und die zweite Gruppe von Samplingzellen von zwei getrennten Ketten von Verzögerungselementen (18) gesteuert wird, welche jeweils den beiden Zellengruppen zugeordnet sind.

3. Empfänger nach Anspruch 1, bei dem die Erfassung des Signals durch die erste und die zweite Gruppe von Samplingzellen durch eine einzige Kette von Verzögerungselementen (18) gesteuert wird.

4. Empfänger nach einem beliebigen der Ansprüche 1 bis 3, bei dem die Verzögerung δ programmierbar ist.

5. Empfänger nach Anspruch 4, bei dem die Verzögerung δ innerhalb einer Übertragungssitzung konstant bleibt.

6. Empfänger nach Anspruch 4, bei dem die Verzögerung ö innerhalb einer Übertragungssitzung nach einer vorgegebenen Regel variiert.

7. Empfänger nach Anspruch 1, bei dem der Korrelator (13) ein paralleler zellulärer Korrelator ist.

8. Empfänger nach Anspruch 1, bei dem die erste und die zweite Gruppe von Samplingzellen (16) und der Korrelator (13) in der Form einer monolithischen integrierten Schaltung gebaut sind.

9. Empfänger nach einem beliebigen der vorangegangenen Ansprüche, der keinen Antennenverstärker umfasst.

10. Datenübertragungsverfahren, umfassend:

    - den Empfang eines Ultrabreitband-Signals (UWB-Signal), das mindestens zwei untereinander korrelierte Impulse (6, 7) umfasst und eine Nutzinformation beinhaltet, wobei zwischen den beiden Impulsen (6, 7) eine zeitliche Verzögerung $\delta$ liegt,
    - ein erstes Sampling des empfangenen Signals,
    - ein zweites Sampling des nach der Verzögerung $\delta$ empfangenen Signals,
    - der Ausgabe eines erfassten Signals (14), das sich aus der Korrelation der beiden gesampelten Signale ergibt.

11. Verfahren nach Anspruch 10, bei dem das gesendete Ultrabreitband-Signal Doppelimpulse umfasst.

12. Verfahren nach Anspruch 10 oder 11, bei dem die Information in einer Alles-odernichts-Kodierung gesendet wird.

13. Verfahren nach Anspruch 10 oder 11, bei dem die Information in einer Differentialkodierung gesendet wird.

14. Verfahren nach Anspruch 10 oder 11, bei dem die Impulse (6, 7) mit mindestens einem gesendeten Doppelimpuls gegenphasig sind.

15. Datenübertragungssystem (1), umfassend:

    - mindestens einen Ultrabreitband-Empfänger (3), wie in einem beliebigen der Ansprüche 1 bis 9 definiert,
    - mindestens einen Sender (12), der so angeordnet ist, dass er Multi-Impulse aus mindestens zwei miteinander korrelierten Impulsen mit einer vorgegebenen Verzögerung $\delta$ zwischen den Impulsen sendet.

DONNEES
ENTRANTES

DONNEES
SORTANTES

11  9

<u>FIG.1</u>

1

δ

6  7

<u>FIG.2</u>

4  5

<u>FIG.3</u>

9

10

11

13

Signal
détecté

10'

14

22

δ

15

Signal
d'acquisition

<u>FIG.4</u>

FIG.5

FIG.6

Premier
échantillonnage

Deuxième
échantillonnage

$\tau$

$\delta$

FIG.7

V1  V1'   V2  V2'   ...   Vn  Vn'   13

* 20   * 20   * 20

$\Sigma$

FIG.8

Premier
échantillonnage

Deuxième
échantillonnage

Corrélation ⟶ Signal utile

FIG.9

10                                    10'

Signal
d'acquisition

$\tau$ $\tau$ $\tau$ 18 $\tau$ 18 $\tau$ $\tau$ $\tau$ $\tau$

16

$V_1$   $V_n$         $V'_1$   $V'_n$

Signal UWB

FIG.10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 6763057 B

**Littérature non-brevet citée dans la description**

• *Multiuser Interference and Inter-Frame Interference in UWB Transmitted Reference Systems,* 18 Mai 2004, 96-100

• *Generalized Transmitted Reference UWB Systems, Ultrawidebard Systems and Technologies,* 16 Novembre 2003, 147-151
• UWB, Theory and Applications. JOHN WILEY AND SONS, LTD, 2004